Europäisches Patentamt

European Patent Office    (11) Publication number:    **0 281 339**

Office européen des brevets    **A2**

# EUROPEAN PATENT APPLICATION

(21) Application number: 88301714.7    (51) Int. Cl.⁴: **B32B 15/00** , B29C 67/18

(22) Date of filing: 26.02.88

(30) Priority: 03.03.87 JP 49590/87

(43) Date of publication of application:
07.09.88 Bulletin 88/36

(84) Designated Contracting States:
DE FR GB

(71) Applicant: SUMITOMO CHEMICAL COMPANY,
LIMITED
15 Kitahama 5-chome Higashi-ku
Osaka-shi Osaka 541(JP)

(72) Inventor: Satoh, Tomoari
4, Taikoyama-9-chome Kosugimachi
Imizu-gun Toyama-ken(JP)
Inventor: Hori, Kunihiko
656, Kaganomiya
Shinminato-shi(JP)

(74) Representative: Lamb, John Baxter et al
MARKS & CLERK 57/60 Lincoln's Inn Fields
London WC2A 3LS(GB)

(54) A process for laminating a thermoplastic resin film onto a metal sheet.

(57) A process for laminating a thermoplastic resin film onto a metal sheet by passing a thermoplastic resin film and a metal sheet, one superposed on the other, through a gap between a heating roll and roll not having a heat source so that the themoplastic resin film faces the roll not having a heat source and the metal sheet faces the heating roll whereby to melt only the surface of the thermoplastic resin film to adhere to the metal sheet, in which the contact time and contact length of the rolls with the thermoplastic resin film or metal sheet are from 1 to 10 seconds and from 2 to 20 mm, respectively, and the surface temperature of the heating roll is from -20°C to +80°C as compared with the melting point of the thermoplastic resin.

# A PROCESS FOR LAMINATING A THERMOPLASTIC RESIN FILM ONTO A METAL SHEET

The present invention relates to a process for laminating a thermoplastic resin film onto a metal sheet.

The present inventors previously found a process for heat fusion bonding a thermoplastic fluorocarbon resin film onto an aluminum sheet whereby was obtained a sheet laminated with a film of fluorocarbon resin having an excellent adhesiveness and surface finish (Japanese Patent No. 1382436). In said process, the heat fusion bonding between the thermoplastic resin film and the aluminum sheet is carried out by a heat press or a heating roll, whereby the laminated material having a high adhesiveness and an excellent surface smoothness can be provided.

However, when more severe request for the surface smoothness is encountered, the above-mentioned process has such disadvantages that the thickness of the thermoplastic film is greatly decreased after the heat fusion bonding because the thermoplastic resin film is entirely fused and pressed onto the metal sheet and that the properties of the thermoplastic resin film is deteriorated when the cooling rate is improper after the film is entirely fused.

The object of the present invention is to provide a process for laminating a thermoplastic resin film onto a metal sheet by adopting such a method that the thermoplastic resin film is heated indirectly and instantly between a heating roll and a roll not having a heat source whereby is obtained a laminated sheet having a uniformity in thickness of the film, an extremely small thickness decrease, smoothness of the surface, an excellent adhesiveness and formability.

More particularly, according to the present invention, there is provided a process for laminating a thermoplastic resin film onto a metal sheet comprising passing a thermoplastic resin film and a metal sheet in the superposed state through a space between a heating roll and a roll not having a heat source in such a manner that the thermoplastic resin film faces the roll not having a heat source and the metal sheet faces the heating roll so as to melt only the surface of the thermoplastic resin film to adhere to the metal sheet, wherein the contact time and contact length of the rolls to the thermoplastic resin film or metal sheet is 1 to 10 seconds and 2 to 20 mm, respectively, and the surface temperature of the heating roll is from -20°C to +80°C in comparison with the melting point of the thermoplastic resin.

In the present invention, any known metal sheet can be used. Preferably, there can be used a sheet or a foil of aluminum, copper, iron, titanium or the alloys thereof, more preferably, a sheet of aluminum or brass or a foil of copper.

The surface state of the metal sheet used in the present invention is not critical. Preferably, oils and dirts are removed from the surface of the metal. More preferably, it is further treated with a treatment that improves the adhesiveness thereof to a thermoplastic resin film. The treatment that improves the adhesiveness includes a mechanical surface roughening, a chemical surface roughening, a film formation by anodizing or a film formation by a chemical treatment. In view of the uniformity of the thickness of the thermoplastic resin film and the smoothness of the surface thereof, which is an object of the present invention, a film formation by the chemical treatment is more preferable than the surface roughening.

In the present invention, either engineering plastics or general-purpose plastics can be used as a thermoplastic resin film. Here, the engineering plastics means "those to which standard metal engineering equations can be applied; they are capable of sustaining high loads and stress, and are machinable and dimensionally stable. ["The Condensed Chemical Dictionary, Tenth Edition" revised by G.G. Hawley, (1981), p. 821]." Preferably, there can be used a film of the engineering plastic such as polyarylate (hereinafter referred to as PAR), polyethersulfone (hereinafter referred to as PES), polyetheretherketone (PEEK), polyamide, polyacetal, polyamideimide, polyetherimide and polymethylpentene (hereinafter referred to as TPX) and of a fluorocarbon resin such as copolymer of tetrafluoroethylene and hexafluoropropylene (hereinafter referred to as FEP), copolymer of tetrafluoroethylene and perfluoroalkoxyethylene (hereinafter referred to as PFA), copolymer of tetrafluoroethylene and ethylene (hereinafter referred to as ETFE) and polytetrafluoroethylene (hereinafter referred to as PTFE). More preferably, there can be used PAR, PES, PEEK, TPX, FEP, PFA, ETFE and PTFE, most preferably, PEEK, FEP and PFA.

The widths of the metal sheet and the thermoplastic resin film are not critical provided it is narrower than those of the rolls described later. The widths of the metal sheet and the thermoplastic resin film may be the same or different.

The process of the present invention is characterized in that it is carried out in such a manner that only the surface of the thermoplastic resin film to adhere to the metal sheet is melted but not in such a manner that the entire thermoplastic resin is melted by a conventional method using a heat press or a heating roll. To be concrete, the process of the present invention is carried out in such a manner that the thermoplastic resin film is melted up to 50% of the original thickness from the surface being in contact with the metal sheet. By adopting the process of the present invention, there can be obtained a laminated sheet having a uniform thickness over the entire film and an excellent smoothness of the surface thereof, which sheet is superior in adhesiveness and processability, without a decrease of the original thickness of the film after the lamination.

Here, the smoothness of the surface means that the surface of the thermoplastic resin film is not only smooth but also it does not contain voids or the like.

In the present invention, the method for heating and melting only the surface of the thermoplastic resin film to adhere to the metal sheet is not critical. Specific examples thereof are as follows:

(1) A method comprising heating a metal sheet by a heater such as an infrared heater or the like installed in front of a pair of rolls followed by pressing a thermoplastic resin film with the heated metal sheet in the superposed state between the roll to melt only the surface of the thermoplastic resin film to adhere to the metal sheet.

(2) A method comprising passing a thermoplastic resin film and a metal sheet in the superposed state through a space between a heating roll and a roll not having a heat source in such a manner that the thermoplastic resin film faces the roll not having a heat source and the metal sheet faces the heating roll so as to melt only the surface of the thermoplastic resin film to adhere to the metal sheet.

Among the above-mentioned methods, the method (2) using a heating roll is preferred since it has few disadvantages.

The heating roll is preferably made of metal, more preferably, made of stainless steel.

The method for heating the roll is not critical. For example, there can be adopted a method comprising passing a heat transfer medium such as steam, heated silicone oil or the like through a hollow metal roll or a method comprising using a roll having an inner heat source such as a roll having electric heating elements, an induction heating roll or the like.

Among these, the method using an induction heating roll is preferred.

The roll not having a heat source is preferably made of heat-resisting rubber, more preferably, made of heat-resisting silicone rubber or heat-resisting fluorubber.

Both rolls may have a smooth surface.

The diameters of the rolls are not critical. Preferably, they are 100 to 700 mm. The diameters of the heating roll and roll not having a heat source may be the same or different.

The widths of the rolls are not critical. Preferably, they are 300 to 5000 mm. The widths of the heating roll and roll not having a heat source may be the same or different.

In using a combination of the heating roll and the roll not having a heat source, one of them may be a driving roll and the other a free-running roll, or both of them may be driving rolls. When both of them are driving rolls, they should run in the substantially same line speed.

It is also possible to use plural sets of rolls to repeatedly effect the lamination; however, the lamination is preferably completed at the first pass because the repeated passes may make the surface of the thermoplastic resin film dirty or scratched.

The contact length of the rolls to the thermoplastic resin film or the metal sheet along with the direction the film and the metal sheet move can be controlled by properly regulating the pressure given to the shafts of the rolls. It cannot be exactly controlled by regulating the clearance between the rolls so that it is not preferable.

The thermoplastic resin film and the metal sheet are inserted in the superposed state to the space between the rolls in such a manner that the thermoplastic resin film faces the roll not having a heat source and the metal sheet faces the heating roll, thereby the thermoplastic resin film is heated under pressure at a prescribed time and length through the aid of the metal sheet heated by the heating roll.

Those who are skilled in the art may easily determine the lamination conditions such as the surface temperature of the heating roll, the contact time, the contact length and the like according to the kind and thickness of the metal sheet, the melting point of the thermoplastic resin and the like.

For example, when the metal sheet is made of aluminum, copper or brass and the thickness thereof is about 0.02 to 1.5 mm, the contact time and contact length of the rolls to the thermoplastic resin film or metal sheet are usually 1 to 10 seconds and 2 to 20 mm, preferably, 1 to 3 seconds and 5 to 15 mm, respectively. When the contact length exceeds 20 mm or the contact time exceeds 10 seconds, a remarkable decrease of the thickness is caused because the thermoplastic resin film is entirely melted during the lamination. There may be also caused a deterioration of the surface smoothness of the resulting laminated sheet and a deterioration of the properties of the thermoplastic resin film depending on the kind of the resin. When the contact time is shorter than 1 seconds or the contact length is shorter than 2 mm, the adhesion between the thermoplastic resin film and the metal sheet of the resulting laminated sheet is not sufficient because the fusion bonding between them is not sufficiently made.

The surface temperature of the heating roll may be properly determined according to the kind of the thermoplastic resin film. It is usually from -20°C to +80°C in comparison with the melting point of the thermoplastic resin. When the surface temperature of the heating roll exceeds the upper limit, the surface finish of the resulting laminated sheet tend to be insufficient, whereas when it is less than the lower limit, the adhesion between the thermoplastic resin film and the metal sheet of the resulting laminated sheet tend to be insufficient.

If such a laminated sheet that a thermoplastic resin film is sandwitched by two metal sheets is intended, it can be obtained by passing a thermoplastic resin film and a metal sheet through a space between a heating roll and a roll not having a heat source followed by passing the resulting laminated sheet and another metal sheet through a space between the same or different heating roll and roll not having a heat source. In addition, by repeating the same manner as above, an excellent multilayer-laminated sheet consisting of alternative layers of thermoplastic resin films and metal sheets can be obtained.

As described above, the present invention relates to a process for laminating a thermoplastic resin film onto a metal sheet comprising passing a thermoplastic resin film and a metal sheet through a space between a heating roll and a roll not having a heat source in such a manner that the thermoplastic resin film is indirectly heated through the aid of the metal sheet heated by the heating roll under specific conditions. According to the present invention, the thickness of thermoplastic resin film can be maintained almost completely after the lamination. And the resulting laminated sheet is superior in bonding strength between the metal and the resin and in uniformity and smoothness of the surface. The thermoplastic resin film of the laminated sheet cannot be easily damaged even when it is subjected to forming such as a deep draw or the like. Accordingly, the process of the present invention has a remarkably high value in industry.

The present invention is illustrated in more detail with reference to the following Examples and Comparative Examples, which are not, however, to be interpreted as limiting the invention thereto.

Example 1

An aluminum sheet (type: AA Standard 1050-H24) having a thickness of 1.0 mm was degreased by trichloroethylene, and was dipped for 5 minutes at 95°C into a weak alkaline aqueous solution of pH 10 prepared by dissolving 0.5% by volume of triethanolamine in demineralized water having a specific resistance of $500 \times 10^4$ $\Omega$cm.

As the thermoplastic resin film, a polyetheretherketone resin film having a thickness of 50 $\mu$m and a melting point of 334°C (hereinafter referred to as PEEK film) was used.

An induction heating roll made of metal (diameter: 250 mm, width: 700 mm) and a roll having no heat source made of heat-resisting silicone rubber (diameter: 250 mm, width: 600 mm) were installed so that they face each other and the former roll installed under the latter.

The surface temperature of the heating roll was controlled at 410°C. Then, the aluminum sheet and the thermoplastic resin film were passed in the superposed state through a space between the rolls in such a manner that the PEEK film faces the upper rubber roll, the aluminum sheet faces the lower heating roll, and the contact length and contact time of the rolls to the aluminum sheet or PEEK film were 15 mm and 2 seconds, respectively.

After the resulting laminated sheet was air-cooled, the thickness of the thermoplastic resin film was measured by a thickness meter and it was 49.5 $\mu$m. That is, the original thickness of the film was almost maintained after the lamination.

Moreover, the laminated sheet had a smooth and excellent surface without voids having a uniform thickness over the entire sheet.

Then, the sheet was subjected to a deep drawing test using a cup die to be found that it was easily cup-formed (100 mm in diameter and 120 mm in depth) without any problem.

In addition, the adhesion between the aluminum sheet and the PEEK film was evaluated in accordance with ASTM D-903-49 to be affirmed that the adhesion between them was so strong that the PEEK film itself broke at 6.5 kg/cm-width.

Example 2

A copper foil having a thickness of 35 $\mu$m (made by Nikko Gould Foil Co., Ltd. for TC foil) was used as the metal sheet, and a film of copolymer of tetrafluoroethylene and hexafluoropropylene having a thickness and melting point of 25 $\mu$m and 270°C, respectively (hereinafter referred to as FEP film), was used as the thermoplastic resin film.

The same rolls as in Example 1 were used and the surface temperature of the lower heating roll was controlled at 310°C. Then, the copper foil and the FEP film were passed in the superposed state through a space between the rolls in such a manner that the copper foil faces the heating roll, the FEP film faces the upper roll having no heat source, and the contact length and contact time of the rolls to the FEP film or copper foil were 5 mm and 1.5 seconds, respectively.

After the resulting laminated sheet was air-cooled, the thickness of the FEP film of the laminated sheet was measured in the same manner as in Example 1 as 24 μm. That is, the original thickness was almost maintained after the lamination.

Moreover, the laminated sheet had a smooth and excellent surface without voids having a uniform thickness over the entire sheet.

In addition, the adhesion between the copper foil and the FEP film was evaluated in the same manner as in Example 1 to be affirmed that the adhesion between them was so strong that the FEP film itself broke at 0.6 kg/cm-width.

Example 3

After degreasing a brass sheet having a thickness of 0.5 mm. (type: Japanese Industrial Standard C2680-P-H) by an alkaline solution, the sheet was subjected to a film formation by chemically treating the same with chromic acid and was used as the metal sheet.

A film of copolymer of tetrafluoroethylene and perfluoroalkoxyethylene having a thickness and melting point of 50 μm and 310°C, respectively (hereinafter referred to as PFA film), was used as the thermoplastic resin film.

The lamination was carried out in the same manner as in Example 1 except that the surface temperature of the heating roll was controlled at 380°C.

After the resulting sheet was air-cooled, the thickness of the PFA film was measured in the same manner as in Example 1 using the thickness meter as 49 μm. That is, the original thickness of the PFA film was almost maintained after the lamination.

Moreover, the laminated sheet had a smooth and excellent surface without voids having a uniform thickness over the entire sheet.

In addition, the adhesion between the brass sheet and the PFA film was evaluated in the same manner as in Example 1 to be affirmed that the adhesion between them was so strong that the PFA film itself broke at 1.75 kg/cm-width.

Comparative Example 1

The same aluminum sheet and PEEK film as used in the Example 1 were hot pressed for 5 minutes in the superposed state by means of a hot press at a temperature and pressure of 410°C and 5 kg/cm², respectively.

The thickness of the PEEK film of the resulting laminated sheet was measured in the same manner as in Example 1. It was decreased down to 38 μm, that is 76% of the original thickness of 50 μm. Moreover, the laminated sheet had many voids between the PEEK film and the metal sheet and lacked the smoothness of the surface.

In addition, the adhesion between the aluminum plate and the PEEK film was evaluated in the same manner as in Example 1. The PEEK film was peeled off from the aluminum sheet at a strain of 3.0 kg/cm-width which is considered to be due to the weakening of the adhesion by the voids.

Comparative Example 2

The procedure of the Example 1 was repeated except that the same heating rolls as in Example 1 were adopted as the upper and lower rolls and the surface temperatures thereof were both controlled at 410°C.

The thickness of the PEEK film of the resulting laminated sheet was measured in the same manner as in Example 1. It was decreased down to 40 μm, that is 80% of the original thickness of 50 μm. Moreover, the sheet lacked a uniformity in thickness, and the surface of the sheet had some problems in smoothness such as a surge and a transfer of streak of the upper roll caused by the melting of the surface thereof.

The adhesion was as satisfactory as in Example 1.

Comparative Example 3

The procedure of the Example 1 was repeated except that the contact time and contact length were 13 seconds and 30 mm, respectively.

The thickness of the PEEK film of the resulting laminated sheet was decreased down to 42 μm, that is 84% of the original thickness of 50 μm. Moreover, the sheet had problems in smoothness of the surface and in uniformity of the thickness like in the Comparative Example 2.

The said laminated sheet was subjected to the deep drawing test as same as in the Example 1 to be found that the film broke in the middle of the test and a satisfactory product could not be obtained. Examining the ruptured section of the film, it was found that the rupture began at a point where the thickness was uneven.

## Claims

1. A process for laminating a thermoplastic resin film onto a metal sheet by passing a thermoplastic resin film and a metal sheet, one superposed on the other, through a gap between a heating roll and roll not having a heat source so that the themoplastic resin film faces the roll not having a heat source and the metal sheet faces the heating roll whereby to melt only the surface of the thermoplastic resin film to adhere to the metal sheet, in which the contact time and contact length of the rolls with the thermoplastic resin film or metal sheet are from 1 to 10 seconds and from 2 to 20 mm, respectively, and the surface temperature of the heating roll is from -20°C to +80°C as compared with the melting point of the thermoplastic resin.

2. A process according to Claim 1, wherein the contact time and contact length of the rolls with the thermoplastic resin film or metal sheet are from 1 to 3 seconds and from 5 to 15 mm, respectively.

3. A process according to Claim 1 or Claim 2 wherein the heating roll is an induction heating roll.

4. A process according to any one of Claims 1 - 3 wherein the roll not having a heat source is made of a heat-resistant rubber.

5. A process according to any one of Claims 1 - 4 wherein the metal sheet has a thickness of from 0.02 to 1.5 mm.

6. A process according to any one of Claims 1 - 5 wherein the metal sheet is a sheet or foil of aluminum, copper, iron, titanium or an alloy thereof.

7. A process according to Claim 6 wherein the metal sheet is an aluminum sheet, a copper foil or brass sheet

8. A process according to any one of claims 1 - 7, wherein oil and dirt on the surface of the metal sheet are removed beforehand.

9. A process according to any one of Claims 1 - 7, wherein the surface of the metal sheet is treated beforehand to improve the adhesion properties thereof.

10. A process according to Claim 9 wherein the surface of the metal sheet is treated by mechanical surface roughening, chemical surface roughening, film formation by anodizing or film formation by chemical treatment.

11. A process according to Claim 9 wherein the surface of the metal sheet is treated by film formation by chemical treatment.

12. A process according to any one of Claims 1 - 11 wherein the thermoplastic resin film is made of an engineering plastic or fluorocarbon resin.

13. A process according to any one of Claims 1 - 12 wherein the thermoplastic resin film is formed of a polyarylate, polyethersulfone, polyetheretherketone, copolymer of tetrafluoroethylene and hexafluoropropylene, tetrafluoroethylene/perfluoroalkoxyethylene copolymer, tetrafluoroethylene/ethylene copolymer or polytetrafluoroethylene resin.

14. A process according to Claim 13 wherein the thermoplastic resin film is formed of a polyetheretherketone, tetrafluoroethylene/hexafluoropropylene copolymer or tetrafluoroethylene/perfluoroalkoxyethylene copolymer resin.